# EUROPÄISCHE PATENTANMELDUNG

(11) **EP 3 301 794 A1**
(43) Veröffentlichungstag der Anmeldung: **04.04.2018**
(21) Anmeldenummer: 16191733.1
(22) Anmeldetag: 30.09.2016
(51) Int. Cl.: H02K 15/00, H02K 15/02, H02K 15/10, H02K 17/18

(54) **HERSTELLEN EINES LÄUFERS EINER ROTIERENDEN ELEKTRISCHEN MASCHINE**

(71) Anmelder: Siemens Aktiengesellschaft, 80333 München (DE)
(72) Erfinder: Bittner, Roland, 91522 Ansbach (DE); Hösle, Markus, 91058 Erlangen (DE)

(57) **Zusammenfassung**

Die Erfindung betrifft ein Verfahren zum Herstellen eines Läufers (14) einer rotierenden elektrischen Maschine (10), bei dem zumindest eine Läuferwicklung (20) in ein Läuferblechpaket (16) des Läufers (14) elektrisch isoliert eingebracht wird, wobei die Läuferwicklung (20) mittels eines additiven Herstellverfahrens im Läuferblechpaket (16) ausgebildet wird, wobei zugleich mit dem Ausbilden der Läuferwicklung (20) zwischen einem elektrischen Leiter (22) der Läuferwicklung (20) und dem Läuferblechpaket (16) und/oder zwischen benachbart angeordneten Leitern (22) der Läuferwicklung (20) eine elektrische Isolationsschicht (46) ausgebildet wird.

## Beschreibung

Die Erfindung betrifft ein Verfahren zum Herstellen eines Läufers einer rotierenden elektrischen Maschine, bei dem zumindest eine Läuferwicklung in ein Läuferblechpaket des Läufers elektrisch isoliert eingebracht wird.

Gattungsgemäße elektrische Maschinen sowie Läufer hierfür sind dem Grunde nach im Stand der Technik bekannt, sodass es eines gesonderten druckschriftlichen Nachweises hierfür nicht bedarf. Bei einer rotierenden elektrischen Maschine ist in der Regel ein Ständer als Stator vorgesehen, der üblicherweise eine im Wesentlichen kreisförmige Öffnung zur Aufnahme eines als Rotor ausgebildeten Läufers bereitstellt. In der Öffnung ist der Läufer um eine Drehachse des Läufers drehbar gelagert angeordnet, wobei zwischen dem Läufer und dem Ständer ein Luftspalt ausgebildet ist.

Die rotierende elektrische Maschine ist eine Vorrichtung, die in einem Motorbetrieb elektrische Energie in mechanische Energie, insbesondere Bewegungsenergie, und/oder in einem Generatorbetrieb mechanische Energie in eine elektrische Energie umwandelt. Bei der Bewegung handelt es sich in der Regel um eine Drehbewegung, die vom Läufer ausgeführt wird. Der Ständer ist - im Unterschied zum Läufer - in der Regel drehfest angeordnet, das heißt, bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt. Im Generatorbetrieb wird die dem Läufer zugeführte mechanische Energie in Form einer Rotation in elektrische Energie umgewandelt. Zu diesem Zweck weisen der Ständer und der Läufer jeweils eine von einem elektrischen Strom durchflossene Wicklung auf.

Rotierende elektrische Maschinen der gattungsgemäßen Art sind beispielsweise Drehfeldmaschinen, die an ein mehrphasiges, insbesondere dreiphasiges, elektrisches Wechselspannungsnetz angeschlossen sind, wie beispielsweise Asynchronmaschinen, Synchronmaschinen, Synchronmaschinen mit Dämpferkäfig oder dergleichen, oder auch Gleichstrommaschinen wie Nebenschluss- oder Reihenschlussmaschinen oder dergleichen.

Eine besondere rotierende elektrische Maschine ist die Asynchronmaschine, bei der der Läufer in einem rotierenden Magnetfeld des Ständers im Generatorbetrieb vor- oder im Motorbetrieb nachläuft. Die Asynchronmaschine weist einen passiven Läufer auf, der entweder permanent nach Art eines Kurzschlussläufers beziehungsweise Käfigläufers oder auch fallweise kurzgeschlossen werden kann, beispielsweise bei einem Schleifringläufer. Bei Einsatz im Generatorbetrieb kann der Läufer der Asynchronmaschine auch mit einer abweichenden Frequenz erregt werden, beispielsweise bei einer doppelt gespeisten Asynchronmaschine oder dergleichen. Einphasig betreibbare Asynchronmaschinen sind beispielsweise der Kondensatormotor, der Spaltpolmotor, der Anwurfmotor oder dergleichen.

Die Asynchronmaschine ist heutzutage eine der am häufigsten verwendeten rotierenden elektrischen Maschinen. Ein Vorteil von Asynchronmaschinen gegenüber anderen rotierenden elektrischen Maschinen ist, dass eine Kommutierung mittels Kommutator und Bürsten vermieden werden kann. Gleichwohl ergibt sich durch den Betrieb der Asynchronmaschine eine unerwünschte Netzrückwirkung, und zwar in Bezug auf Oberwellen, die unter anderem durch den bestimmungsgemäßen Betrieb der Asynchronmaschine durch den netzseitig bewirkten elektrischen Strom verursacht werden.

Die Asynchronmaschine weist üblicherweise als Hauptbestandteile im Wesentlichen den Ständer und den Läufer auf. In den Wicklungen des Läufers und des Ständers werden elektrische Ströme im Wesentlichen in eine axiale Richtung, das heißt, parallel zur Drehachse des Läufers luftspaltseitig geführt. Zu diesem Zweck weisen sowohl der Ständer als in der Regel auch der Läufer jeweils entsprechend ausgebildete Wicklungen auf, nämlich ständerseitig eine Ständerwicklung und läuferseitig eine Läuferwicklung. Die Läuferwicklung kann eine oder mehrere Drahtwicklungen, eine oder mehrere Formspulen, einen oder mehrere aus elektrischen Leitern, insbesondere Stäben, gebildete Käfige, Kombinationen hiervon oder dergleichen umfassen. Zur gewünschten Führung des durch die Wicklungen bereitgestellten magnetischen Felds sind sowohl ständerseitig als auch läuferseitig Blechpakete vorgesehen, und zwar ständerseitig das Ständerblechpaket und läuferseitig das Läuferblechpaket. Üblicherweise sind die Blechpakete in axialer Richtung gemäß der Drehachse geblecht ausgeführt, um unerwünschte Wirkungen, beispielsweise aufgrund von Wirbelstromeffekten und/oder dergleichen, zu reduzieren oder sogar gänzlich zu vermeiden.

Bei einem Kurzschluss- beziehungsweise Käfigläufer ist die Wicklung in der Regel innerhalb des Läufers kurzgeschlossen. Sie kann beispielsweise elektrisch leitfähige Stabwicklungen oder dergleichen aufweisen. Bei einer Stabwicklung sind axiale Enden der elektrisch leitfähigen Stäbe an den axialen Enden des Läufers kurzgeschlossen, beispielsweise mittels eines Kurzschlussrings oder dergleichen. Die Wirkungsweise der Asynchronmaschine basiert auf einem durch die Ständerwicklung erzeugten Drehfeld, welches im Luftspalt zwischen dem Ständer und dem Läufer radial ausgerichtet ist. Um eine möglichst gleichmäßige Kraftwirkung auf den Läufer erreichen zu können, wäre ein sinusförmig verlaufendes Luftspaltfeld wünschenswert. Dieses müsste durch die Ständerwicklung bereitgestellt werden. Zugleich könnte dadurch eine günstige Wirkung hinsichtlich der Netzrückwirkungen, insbesondere der Oberwellen erreicht werden.

Bei den derzeit praktisch realisierbaren Asynchronmaschinen sind hierbei jedoch enge Grenzen gesetzt. Durch die bisher üblichen Fertigungsverfahren, das heißt, das Anordnen von elektrisch leitfähigen Stäben in radial nach außen offenen Nuten des Läuferblechpakets kann zwar durch die Anzahl der Stäbe ein gewisser Einfluss erreicht werden, jedoch sind die Möglichkeiten der Beeinflussung begrenzt.

Darüber hinaus wurde bereits auch versucht, zusätzliche elektrische leitfähige Stäbe innerhalb des Blechpakets einzubringen. Jedoch erwies sich dieses Vorgehen als fertigungstechnisch außerordentlich aufwändig, sodass sich diese Technik bislang kaum durchsetzen konnte.

Schließlich wurde auch versucht, durch Sehnungsfaktoren eines gesehnten Wicklungssystems des Ständers die Oberwellen zu reduzieren, um das Luftspaltfeld einer Sinusform angleichen zu können. Ein solches Wicklungssystem benötigt aber aufgrund der stirnseitigen Schaltungsanordnung einen hohen Kupferaufwand, der nicht zur Antriebswirkung der Asynchronmaschine beiträgt und damit die Effizienz der Asynchronmaschine teilweise deutlich reduziert. Eine Verbesserung diesbezüglich kann zwar mit konzentrierten Wicklungen, beispielsweise Zahnspulen, erreicht werden, jedoch verschlechtert sich dadurch die Situation in Bezug auf die Oberwellen des Luftspaltfeldes.

Der Erfindung liegt deshalb die Aufgabe zugrunde, ein Herstellungsverfahren für einen Läufer einer Asynchronmaschine anzugeben, mit dem ein Läufer für eine rotierende elektrische Maschine mit einer verbesserten Wirkung in Bezug auf Netzrückwirkungen, insbesondere Oberwellen, und/oder einer Antriebswirkung hergestellt werden kann.

Als Lösung wird mit der Erfindung ein Verfahren gemäß dem unabhängigen Anspruch 1 vorgeschlagen.

Weitere vorteilhafte Ausgestaltungen ergeben sich anhand von Merkmalen der abhängigen Ansprüche.

Bezüglich eines gattungsgemäßen Verfahrens wird mit der Erfindung insbesondere vorgeschlagen, dass die Läuferwicklung mittels eines additiven Herstellverfahrens im Läuferblechpaket ausgebildet wird, wobei zugleich mit dem Ausbilden der Läuferwicklung zwischen einem elektrischen Leiter der Läuferwicklung und dem Blechpaket und/oder zwischen benachbart angeordneten elektrischen Leitern der Läuferwicklung eine elektrische Isolationsschicht ausgebildet wird.

Mit der Erfindung ist es erstmals möglich, nahezu beliebige Ausgestaltungen der Läuferwicklung zu realisieren, insbesondere auf einfache Weise mehrere Läuferwicklungen auszubilden, die vorzugsweise auch voneinander elektrisch isoliert ausgebildet sein können. Dadurch kann gezielt auf das Magnetfeld im Luftspalt der rotierenden elektrischen Maschine Einfluss genommen werden, sodass durch geeignete Leiteranordnung eine gute Annäherung an eine sinusförmige Ausbildung des Luftspaltfeldes erreicht werden kann. Durch das additive Herstellverfahren ist es nämlich möglich, auf einfache Weise auch komplexe Leiterstrukturen als Läuferwicklung auszubilden. So brauchen die Leiter der Läuferwicklung nicht mehr zwingend im Bereich der Oberfläche des Läufers ausschließlich positioniert zu sein, sondern es können darüber hinaus auch Leiter vorgesehen sein, die in das Blechpaket versenkt angeordnet, insbesondere auch innerhalb des Blechpakets und von diesem umschlossen ausgebildet sind. Dadurch eröffnet sich die Möglichkeit, eine nahezu beliebige Wicklungsstruktur bereitzustellen, die es erlaubt, für verschiedenste Betriebsbedingungen angepasste Magnetfelder bereitzustellen. Somit kann nicht nur der Wirkungsgrad verbessert, sondern auch das im Luftspalt ausgebildete umfängliche Magnetfeld der Sinusform besser angepasst werden, um beispielsweise Netzrückwirkungen wie Oberwellen in Bezug auf den Netzstrom beziehungsweise Versorgungsstrom zu reduzieren oder sogar gänzlich zu vermeiden.

Dabei kann das Blechpaket beispielsweise vor dem Ausbilden der elektrischen Leiter der Läuferwicklung entsprechend bereitgestellt sein, sodass mittels des additiven Herstellverfahrens lediglich noch die Läuferwicklung in das Läuferblechpaket eingebracht zu werden braucht. Das Einbringen der Läuferwicklung kann hierbei vorzugsweise in axialer Richtung der Drehachse erfolgen, wobei beispielsweise Leiter der Ständerwicklung schichtweise in ihrer axialen Erstreckung ausgebildet werden und zugleich entsprechend schichtweise das Läuferblechpaket durch Hinzufügen jeweiliger einzelner Bleche, welche ebenfalls schrittweise ergänzt werden, komplettiert werden. Auf diese Weise sind die elektrischen Leiter der Läuferwicklung für das additive Herstellverfahren permanent zugriffsbereit, beispielsweise für einen Druckkopf oder dergleichen, sodass eine zuverlässige Realisierung der Herstellung des Läufers erreicht werden kann. Zugleich ermöglicht es die Erfindung, nicht nur die Leiter der Läuferwicklung, sondern auch eine geeignete elektrische Isolation zu benachbarten elektrischen Leitern der Läuferwicklung oder anderer Komponenten, beispielsweise des Blechpakets oder dergleichen, zu realisieren. Es sind also keine weiteren Arbeitsschritte erforderlich, um einen vollständig funktionsfähigen Läufer für die rotierende elektrische Maschine bereitstellen zu können.

Durch das additive Herstellverfahren können auf einfache Weise zum Beispiel auch mehrere elektrisch voneinander isolierte Käfige oder zumindest Dämpferschleifen innerhalb des Läufers ausgebildet werden, die die Läuferwicklung bilden, die spezifische der jeweiligen Oberwellen des Luftspaltfeldes dämpfen oder aber - je nach Betriebszustand - es sogar ermöglichen, die Oberwellen für die bestimmungsgemäße Maschinenfunktion genutzt werden können. Insbesondere lässt sich natürlich auch ein Einkäfigläufer herstellen, der lediglich einen einzigen Käfig als Läuferwicklung aufweist. Durch die Nutzung des additiven Herstellverfahrens eröffnet sich ein großer Formenschatz für die Ausgestaltung der Läuferwicklung, insbesondere des gesamten Läufers. Dadurch ist die Herstellung des Läufers nicht mehr eingeschränkt, beispielsweise weil nicht mehr darauf geachtet zu werden braucht, ob zum Beispiel bei einem Hybridläufer ein elektrischer Leiter der Läuferwicklung in Form eines Stabes aus Kupfer in eine Nut des Läuferblechpaketes einlegt ist oder nicht. Es braucht auch nicht mehr darauf geachtet zu werden, ob beim Gießen eines Käfigs aus Aluminium alle Nuten auch mit Aluminium ausgegossen sind. Insbesondere braucht eine Nutform zur Verbesserung des Gießens nicht mehr geändert zu werden. Auch unterschiedliche Schmelzpunkte aufgrund der Nutzung von Kupfer in Verbindung mit Aluminium bei dem Hybridläufer, beispielsweise mit Kupferstäben und Aluminiumguss, sind durch die Nutzung des additiven Fertigungsverfahrens im Wesentlichen unbeachtlich.

Als additives Herstellverfahren können unterschiedliche Verfahren zum Einsatz kommen, beispielsweise ein Sinter- oder Pulverdruckverfahren, ein Drucken mit extrudierten Baumaterialien, eine Stereolithographie und/oder dergleichen. Insbesondere eignen sich als additives Herstellungsverfahren ein 3D-Drucken mit Pulver (3DB), selektives Lasersintern (SLS), selektives Laserschmelzen (SLM) oder dergleichen. Diese additiven Herstellverfahren eignen sich besonders für die Herstellung des Läufers. Bezüglich der Herstellverfahren wird ergänzend auf 3D-Drucken von Petra Fastermann verwiesen, Verlag Springer Viehweg, 2014.

Einzelne oder alle elektrischen Leiter zumindest eines Käfigs können über deren axiale Ausrichtung zum Beispiel bezüglich ihrer Erstreckung hin zu einem Nutgrund einen unterschiedlichen Abstand von der Drehachse haben. Es ist auch möglich, dass einzelne elektrische Leiter oder auch alle elektrischen Leiter zumindest eines Käfigs über deren axiale Ausrichtung zum Beispiel bezüglich ihrer Erstreckung zur zylindrischen Außenseite des Läufers einen unterschiedlichen Abstand zu dieser aufweisen.

Die Läuferwicklung, insbesondere die elektrischen Leiter der Läuferwicklung, können auch in einer Art Sandwichbauweise hergestellt werden. Eine hierdurch bereitgestellte Schichtung kann zum Beispiel radial und/oder tangential vorgesehen sein. Schichten der Sandwichbauweise können über den jeweiligen Kurzschlussring kurzgeschlossen sein.

Gemäß einer vorteilhaften Weiterbildung wird vorgeschlagen, dass die elektrische Isolationsschicht durch Abscheiden eines elektrisch isolierenden keramischen Werkstoffs ausgebildet wird. Die Nutzung eines elektrisch isolierenden keramischen Werkstoffs eignet sich besonders für die Verwendung bei den vorgenannten additiven Herstellverfahren, da sich mit der gleichen Technologie, mit der auch die elektrischen Leiter der Läuferwicklung ausgebildet werden können, die elektrische Isolationsschicht ausgebildet werden kann. Es brauchen hierfür also nur die verwendeten Materialien entsprechend angepasst gewählt und zugeführt zu werden, um die gewünschte Struktur auszubilden.

Grundsätzlich kann die elektrische Isolationsschicht natürlich auch zumindest teilweise durch Abscheiden eines Kunststoffs ausgebildet sein, sodass die elektrische Isolationsschicht durch einen geeigneten Kunststoff ausgebildet wird. In diesem Fall wäre jedoch bezüglich des additiven Herstellverfahrens ein entsprechender zusätzlicher Aufwand vorzusehen, der das Verarbeiten von Kunststoff ergänzend berücksichtigt. Der keramische Werkstoff kann beispielsweise ein elektrisch isolierendes Oxid, beispielsweise Aluminiumoxid, Siliziumdioxid, Kombinationen hiervon oder dergleichen sein.

Gemäß einer Weiterbildung wird vorgeschlagen, dass die elektrische Isolationsschicht ausgebildet wird, indem eine Oberfläche des Leiters der Läuferwicklung zumindest teilweise mit einem weiteren Stoff chemisch reagiert, um die elektrische Isolationsschicht zumindest teilweise auszubilden. Dies kann beispielsweise erreicht werden, indem die zu isolierende Oberfläche des elektrischen Leiters mit einem geeigneten chemischen Stoff beaufschlagt wird, sodass sich eine entsprechende Isolationsschicht durch eine chemische Reaktion an der Oberfläche des Leiters ausbildet. So ist es beispielsweise möglich, bei der Ausbildung eines elektrischen Leiters aus Aluminium seine zu isolierende Oberfläche in Bezug auf benachbarte elektrische Leiter beziehungsweise das Blechpaket mit einer geeignet ausgebildeten Aluminiumoxidschicht zu versehen, indem während des Ausbildungsprozesses des elektrischen Leiters an den Stellen, an denen die elektrische Isolation ausgebildet werden soll, Sauerstoff zugeführt wird, damit durch die Reaktion mit dem Aluminium des elektrischen Leiters eine Aluminiumoxidschicht gebildet wird, die eine elektrische Isolation bereitstellt. Auch weitere chemische Paarungen können vorgesehen sein, um eine geeignete elektrische Isolation bereitstellen zu können. Je nach Spannungsfestigkeit kann eine entsprechende Expositionszeit für die chemische Reaktion vorgesehen sein. Darüber hinaus kann abhängig von der bereitzustellenden Spannungsfestigkeit auch eine entsprechende Auswahl der geeigneten Stoffe vorgesehen sein.

Besonders vorteilhaft erweist es sich, wenn der weitere Stoff ein Oxidationsmittel, insbesondere Sauerstoff, ist, welches durch chemische Reaktion mit einem Werkstoff des elektrischen Leiters die elektrische Isolationsschicht ausbildet. Das Oxidationsmittel kann mittels einer geeigneten Zuführeinheit an die gewünschte zu isolierende Stelle zugeführt werden. Vorzugsweise ist das Oxidationsmittel fluid, insbesondere gasförmig. Es kann mittels einer geeigneten Düse zu der zu isolierenden Stelle zugeführt werden. Es kann auch vorgesehen sein, dass das Oxidationsmittel eine Säure oder dergleichen umfasst.

Eine weitere Ausgestaltung der Erfindung sieht vor, dass das Läuferblechpaket gemeinsam mit der Läuferwicklung ausgebildet wird. Das Ausbilden des Läuferblechpakets kann ebenfalls schichtweise erfolgen. Dabei kann vorgesehen sein, dass die gegenüber einander isolierten Schichten des Läuferblechpakets sehr dünn ausgebildet werden können, um Verluste im bestimmungsgemäßen Betrieb weiter reduzieren zu können. Durch das additive Herstellverfahren ist es nämlich möglich, auch die bisher gewählten Blechstärken für die Läuferbleche des Läuferblechpakets zu reduzieren. Die bisher üblichen Blechstärken stellen in der Regel Kompromisswerte dar, die eine brauchbare Unterdrückung der Wirbelstromausbildung im bestimmungsgemäßen Betrieb bei überschaubarem Fertigungsaufwand ermöglichen. Durch das additive Herstellverfahren kann die Blechstärke nun sehr viel dünner gewählt werden, weil die einzelnen Bleche nicht selbst in einem separaten Fertigungsverfahren hergestellt zu werden brauchen. Dadurch kann der Wirkungsgrad der rotierenden elektrischen Maschine weiter verbessert werden. Dabei kann auch für die Isolation der einzelnen Schichten des Läuferblechpakets vorgesehen sein, dass diese durch Ausbilden einer keramischen Isolationsschicht gegeneinander elektrisch isoliert sind, um die Wirbelstromausbildung wirksam zu unterdrücken. Hierfür kann ein Verfahren genutzt werden, wie es bereits zuvor in Bezug auf das Isolieren des elektrischen Leiters der Läuferwicklung erläutert wurde.

Durch die Verwendung des additiven Herstellverfahrens ist es somit möglich, einen Läufer nicht nur aus einem einzigen Typ von Blech für das Blechpaket aufzubauen, sondern auch eine geeignet ausgewählte unterschiedliche Auswahl von Typen von Blechen. So kann sich jedes Blech von einem anderen und/oder nachfolgenden unterscheiden. Weist der Läufer beispielsweise geschrägte Leiter zumindest in einem Käfig auf und weist der Läufer zusätzlich Kühlkanäle auf, so können diese Kühlkanäle auch achsparallel verlaufen und brauchen nicht geschrägt zu sein.

Besonders vorteilhaft wird die Läuferwicklung zumindest teilweise als elektrisch isolierter Käfig und/oder als eine Dämpferschleife ausgebildet. Dadurch lässt sich auf einfache Weise ein Kurzschlussläufer für die rotierende elektrische Maschine realisieren. So kann die Läuferwicklung als ein homogenes einstückiges Bauteil des Läufers hergestellt werden. Es brauchen keine zusätzlichen elektrischen Verbindungen vorgesehen zu werden, sodass die Zuverlässigkeit und Beanspruchbarkeit des Läufers verbessert werden können. Es kann vorgesehen sein, dass der Käfig lediglich im Bereich des Blechpakets elektrisch isoliert ausgebildet ist. Ein Kurzschlussring des Käfigs kann dagegen beispielsweise ohne eine elektrische Isolation ausgebildet sein, insbesondere wenn er axial aus dem Blechpaket herausragt. Natürlich kann auch vorgesehen sein, dass der Käfig gänzlich ohne eine elektrische Isolation ausgebildet wird.

Ein Käfig der Läuferwicklung weist grundsätzlich im Wesentlichen etwa axial verlaufende Leiter auf, die gerade und/oder auch geschrägt ausgerichtet sein können. Je nach Konstruktion können die elektrischen Leiter an den gegenüberliegenden Stirnseiten des Läufers und/oder gegebenenfalls auch intermediär mittels Kurzschlussringen elektrisch kontaktiert sein. Der Läufer kann somit auch als Staffelläufer oder Doppelstaffelläufer ausgebildet sein. Weist der Läufer eine Mehrzahl von Käfigen auf, beispielsweise zwei, drei oder auch mehr Käfige, die vorzugsweise elektrisch gegeneinander isoliert und gegebenenfalls auch gegenüber dem Läuferblechpaket elektrisch isoliert sind, kann zum Beispiel ein Käfig gestaffelt ausgeführt sein und ein weiterer Käfig auch einfach geschrägt.

Die elektrischen Leiter der Käfige der Läuferwicklung können sowohl ineinander und/oder radial übereinander und/oder in Umfangsrichtung betrachtet nebeneinander in der gleichen und/oder verschiedenen Nuten des Läufers angeordnet sein. Die Nuten können durch eine Aneinanderreihung gestanzter Bleche des Läuferblechpakets gebildet sein oder auch durch das additive Herstellverfahren.

Bei mehreren Käfigen können die jeweiligen Kurzschlussringe sowohl ineinander und/oder auch radial untereinander und/oder axial hintereinander angeordnet sein.

Bei Doppelkäfigläufern, Doppelnutmehrfachkäfigläufern, Doppelnutläufern, Hochnutläufern, Hochstabläufern und/oder dergleichen, können die Leiter einen im Wesentlichen geraden Verlauf aufweisen. Durch die Erfindung, insbesondere das additive Herstellverfahren ist es jedoch möglich, diese auch gebogen, gekrümmt oder mit anderen Verläufen zu realisieren. Auch eine Änderung des Querschnitts in einer Längserstreckung des elektrischen Leiters der Läuferwicklung kann vorgesehen sein.

Darüber hinaus kann vorgesehen sein, dass an einem axialen Ende des Läufers wenigstens ein Kurzschlussring ausgebildet wird, an dem eine, insbesondere über eine axiale Erstreckung des Läuferblechpakets hinausragende, Kühleinheit ausgebildet wird. Vorzugsweise ist die Kühleinheit einstückig mit dem Kurzschlussring ausgebildet. Es brauchen also keine separaten Einheiten zum Zwecke des Kühlens vorgesehen zu werden. Die Kühleinheit kann beispielsweise dadurch gebildet sein, dass stirnseitig an wenigstens einem der axialen Enden des Läufers der Kurzschlussring entsprechende Ausformungen aufweist, die mittels des additiven Herstellverfahrens in einem Schritt ergänzend ausgebildet werden, und mit denen eine Kühlfunktion für den Läufer erreicht werden kann. Die Ausformungen können eine Schaufelform oder dergleichen aufweisen. Darüber hinaus kann natürlich vorgesehen sein, dass mittels des additiven Herstellverfahrens in der Läuferwicklung und/oder im Läuferblechpaket entsprechende Kanäle für ein Kühlfluid ergänzend ausgebildet werden. Mittels des additiven Herstellverfahrens können nämlich solche Kühlkanäle in geeigneter Weise und an besonders bevorzugten Stellen vorgesehen werden, an denen sie mit konventionellen Herstellverfahren nicht realisierbar wären. Insbesondere können natürlich sehr filigrane Kühlstrukturen realisiert werden, die es erlauben, den Läufer in verbesserter Weise entsprechend einer Wärmeentwicklung im bestimmungsgemäßen Betrieb kühlen zu können, sodass der Läufer im bestimmungsgemäßen Betrieb beispielsweise ein möglichst gleichmäßiges Temperaturniveau erreicht. Vorzugsweise kann vorgesehen sein, dass die Kühlkanäle für die Führung eines läuferextern zuführbaren Kühlfluids ausgebildet sind.

Eine weitere Ausgestaltung der Erfindung sieht vor, dass der elektrische Leiter der Läuferwicklung in einer radial nach außen offenen Nut des Blechpakets ausgebildet und die Nut mittels eines, insbesondere magnetischen, Nutverschlusses verschlossen wird. Dadurch kann eine verbesserte Magnetfeldformung für das Luftspaltfeld erreicht werden, um eine Oberwellenausbildung zu reduzieren. Der Nutverschluss kann gleichzeitig mit dem elektrischen Leiter ausgebildet werden. Beispielsweise können offene Nuten des Läufers durch magnetische Nutverschlüsse geschlossen werden, was zu weniger Schwankungen des magnetischen Leitwertes führen kann, wodurch weniger Oberwellen und weniger Verluste, beispielsweise Zahnpulsationsverluste, insbesondere bei Einsatz einer Zahnwicklung, erreicht werden können. Auch der Nutverschluss kann mittels des additiven Herstellverfahrens gefertigt sein. Vorzugsweise kann der Nutverschlusses auch bündig zur zylindrischen Oberfläche des Läufers ausgebildet sein, wodurch eine Geräuschentwicklung im bestimmungsgemäßen Betrieb der rotierenden elektrischen Maschine reduziert werden kann. Auch Dämpfungswicklungen können auf diese Weise additiv hergestellt werden.

Grundsätzlich kann der Käfig bei einem Käfigläufer an eine nahezu beliebige Polpaarzahl des Ständers angepasst sein beziehungsweise sich an diese anpassen.

Die Erfindung ermöglicht es, Oberfelddrehmomente auf einen engen Drehzahlbereich besser beschränken zu können, wobei zum Beispiel ein Oberfeldsattel sehr spitz verlaufen kann. Die Oberfelddrehmomente hängen insbesondere von der Läufernutenzahl ab, wobei sie in der Regel mit zunehmender Läufernutenzahl stärker werden können.

Ferner wird vorgeschlagen, dass der elektrische Leiter der Läuferwicklung in einer Ebene angeordnet wird, die sich außerhalb einer Drehachse des Läufers erstreckt. Die Drehachse des Läufers braucht bei dieser Ausgestaltung also nicht in der Ebene zu sein, in der der elektrische Leiter der Läuferwicklung angeordnet ist. Dadurch kann die Wirkung in Bezug auf die Oberwellen sowie auch eine Wirkung in Bezug auf ein etwaiges Verrasten beim Anlaufen der rotierenden elektrischen Maschine reduziert oder sogar vermieden werden.

Weiterhin wird vorgeschlagen, dass wenigstens einer der elektrischen Leiter der Läuferwicklung im Läuferblechpaket derart ausgebildet wird, dass eine vorgegebene Oberwellenwirkung in Bezug auf ein Magnetfeld des Ständers der elektrischen Maschine im bestimmungsgemäßen Betrieb bereitgestellt wird. Dadurch kann die Oberwellenwirkung in vorgebbarer Weise angepasst werden.

Insgesamt können rotierenden elektrischen Maschinen wie die Asynchronmaschine, insbesondere mit Käfigläufer, aufgrund der anforderungsbedingten Komplexität durch das additive Herstellverfahren hergestellt werden. Es können dadurch zum Beispiel zusätzliche Käfige gegenüber einem klassischen Käfigläufer anordbar vorgesehen werden, um Oberwellen zu dämpfen. Ebenso können mit der Erfindung Kombinationen von geschrägten Leiterstäben mit nicht geschrägten Leiterstäben als Läuferwicklung realisiert werden. Ferner kann die Wicklung des Ständers auch mit Zahnspulen realisiert werden, wodurch eine Automatisierung gegenüber einer Stern-Joch-Paket-Anordnung möglich ist.

Bei einer Berücksichtigung von Oberwellen ist zum Beispiel ein Abstand zweier elektrischer Leiter der Läuferwicklung eines Käfigs oder einer Dämpferschleife gleich einer geraden Anzahl von Halbwellen der zu unterdrückenden Oberwellen. Eventuell können auch mehrere voneinander isolierte Hin- und Rückleiter vorgesehen sein. Ein Abstand kann zum Beispiel 4/5 einer Polteilung betragen. Somit können durch das additive Herstellverfahren, auch 3-D-Technologie genannt, mehrere Käfige für die Läuferwicklung innerhalb des Läufers hergestellt werden. Dabei können der elektrische Leiter der Läuferwicklung, beispielsweise Leiterstäbe und Kurzschlussringe, die Isolation zwischen den elektrischen Leitern und dem Blechpaket sowie auch gegebenenfalls zwischen unterschiedlichen elektrischen Leitern in einer Nut des Läufers, und/oder die magnetfeldführenden Teile, insbesondere das Blechpaket, durch additive Herstellverfahren hergestellt werden. Vorzugsweise kommen unterschiedliche Materialien zum Einsatz. Dies betrifft beispielsweise die elektrischen Leiter und die jeweiligen Kurzschlussringe, die erst durch das additive Herstellverfahren beziehungsweise Drucken entstehen. Ein Käfig kann dem Grunde nach nicht nur aus einem sondern auch aus mehreren elektrisch leitfähigen Materialien wie Kupfer, Aluminium, Silber, Legierungen hiervon und/oder dergleichen hergestellt sein. Bei der Wahl der Materialien können auch unterschiedliche Ausdehnungskoeffizienten berücksichtigt werden. Durch einen graduellen Übergang von einem Material zu einem anderen Material können Verspannungen reduziert werden.

Die jeweiligen elektrischen Leiter, insbesondere Leiterstäbe, können sowohl für die Grundwelle als auch für auftretende Oberwellen des Luftspaltfeldes voneinander getrennt im Läuferblechpaket und/oder ineinander verschachtelt jedoch elektrisch voneinander isoliert angeordnet werden. Leiterquerschnitte der elektrischen Leiter können unter anderem von den zu erwartenden Stromstärken oder dem zu erwartenden Anlaufverhalten, beispielsweise eines Stromverdrängungsläufers, abhängen.

Die Oberwellen haben in der Regel eine von ihrer Ordnungszahl abhängige abweichende Umlaufgeschwindigkeit. Die Umlaufgeschwindigkeit ist üblicherweise gerade so groß, dass die Magnetfelder in einer Periode der Netzspannung gerade ihre Wellenlänge zurücklegen. Durch die unterschiedliche Umlaufgeschwindigkeit stellt sich eine dauernd ändernde Form des Gesamtfeldes ein. Unterschiedliche Käfige innerhalb des Läufers können deshalb für unterschiedliche Betriebspunkte optimiert sein.

Es wird ferner vorgeschlagen, dass wenigstens zwei Käfige ausgebildet werden, von denen ein erster der Käfige für eine Wirkung in Bezug auf eine Grundwelle und ein zweiter der Käfige für eine Wirkung in Bezug auf eine Oberwelle ausgebildet wird. Dadurch ist es möglich, den Läufer individuell in Bezug auf eine Wechselwirkung mit Oberwellen auszubilden. Insbesondere kann vorgesehen sein, dass für jede Oberwelle, die berücksichtigt werden soll, ein entsprechend angepasster Käfig bereitgestellt wird. So kann neben dem zweiten Käfig ergänzend auch ein dritter, ein vierter beziehungsweise ein n-ter Käfig ausgebildet werden. Vorzugsweise ist dann jeder der Käfige auf eine andere Oberwelle abgestimmt ausgebildet.

Darüber hinaus wird vorgeschlagen, dass der elektrische Leiter für den ersten Käfig mit einen größeren Leiterquerschnitt als der elektrische Leiter für den zweiten Käfig hergestellt wird. Dies berücksichtigt, dass in der Regel eine Leistung der Grundwelle deutlich größer als eine Leistung einer oder mehrerer der Oberwellen ist. Häufig nimmt die Leistung der Oberwellen mit zunehmender Ordnungszahl ab. Entsprechend können auch Leiterquerschnitte der an die jeweiligen Oberwellen angepasst ausgebildeten Käfige reduziert werden. Dadurch kann nicht nur Material für die Leiter eingespart werden, sondern es kann trotz der Mehrzahl der Käfige auch zusätzlicher Raum für das Führen des Magnetfeldes bereitgestellt werden, beispielsweise indem in diesem Raum das Läuferblechpaket ergänzend ausgebildet wird oder dergleichen. Weiterhin ermöglicht es gerade die erfindungsgemäße Verfahrensführung im Unterschied zum Stand der Technik, auf einfache Weise eine Vielzahl von unterschiedlichen Käfigen im Läufer vorzusehen. Die Käfige können auch sehr feine Strukturen, beispielsweise filigrane Strukturen, aufweisen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- FIG 1: eine schematische Schnittansicht einer rotierenden elektrischen Maschine mit einem Käfigläufer entlang einer Drehachse des Läufers;
- FIG 2: Eine schematische Stirnseitenansicht eines ersten Käfigläufers gemäß einem ersten Ausführungsbeispiel mit zwei voneinander elektrisch isoliert ausgebildeten Käfigen sowie zwei radial übereinander angeordneten Kurzschlussringen hergestellt mit einem Herstellverfahren der Erfindung;
- FIG 3: Eine schematische Schnittansicht im Bereich eines stirnseitigen Endes des Läufers gemäß FIG 2;
- FIG 4: Eine schematische Stirnseitenansicht eines zweiten Käfigläufers mit zwei voneinander elektrisch isoliert ausgebildeten Käfigen gemäß einem zweiten Ausführungsbeispiel, wobei die Kurzschlussringe der Käfige ineinander angeordnet sind, hergestellt mit dem Herstellverfahren der Erfindung;
- FIG 5: Eine schematische Schnittdarstellung im Bereich des stirnseitigen Endes des Läufers gemäß FIG 4;
- FIG 6: Eine schematische Schnittdarstellung eines Ständers für den Käfigläufer gemäß einer der vorhergehenden Ausführungsbeispiele, wobei der Ständer Zahnspulen entsprechend einer Ausgestaltung als zweipolige rotierende elektrische Maschine aufweist;
- FIG 7: In einer schematischen Darstellung ein Diagramm, mittels welchem das Magnetfeld im Luftspalt über den Umfang verteilt durch Balken dargestellt ist; und
- FIG 8: Eine schematische Querschnittsdarstellung eines Ausschnitts des Käfigläufers gemäß einer der vorhergehenden Figuren quer zur Drehachse des Läufers im Bereich eines Luftspalts.

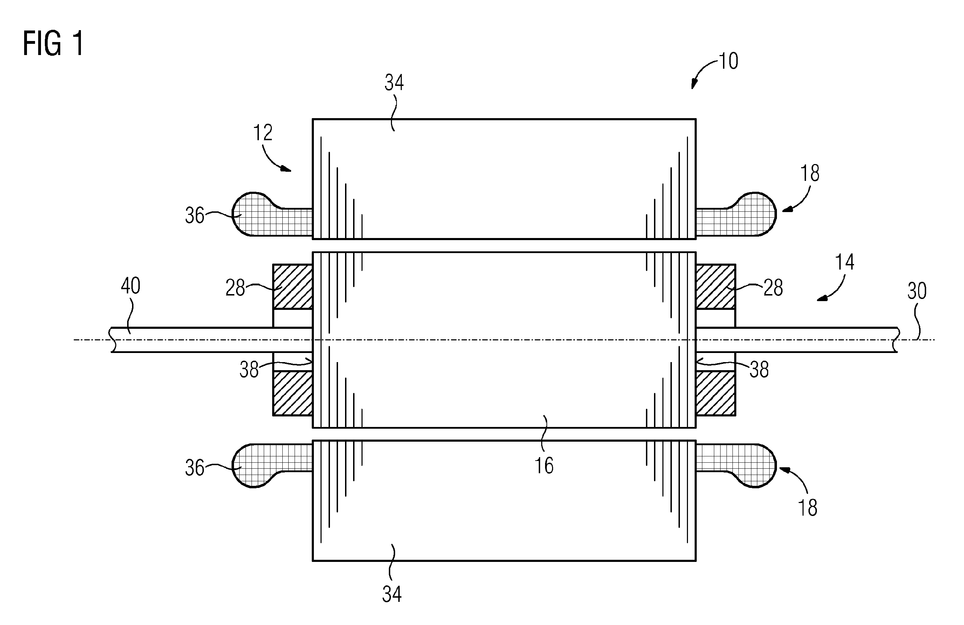

FIG 1 zeigt in einer schematischen Schnittdarstellung eine rotierende elektrische Maschine 10, die vorliegend als Asynchronmaschine für einen Anschluss an ein dreiphasiges Wechselspannungsnetz ausgebildet ist, und die einen Ständer 12 aufweist, der drehfest angeordnet ist. Der Ständer 12 weist ein Ständerblechpaket 34 auf, in welchem eine Ständerwicklung 36 angeordnet ist. In FIG 1 sind von der Ständerwicklung 36 die längsseitig über das Ständerblechpaket 34 hinausragenden Wicklungsköpfe 18 sichtbar. Der Schnitt in FIG 1 ist vorliegend ein Längsschnitt entlang einer Drehachse 30 eines Läufers 14, der als Käfigläufer ausgebildet ist.

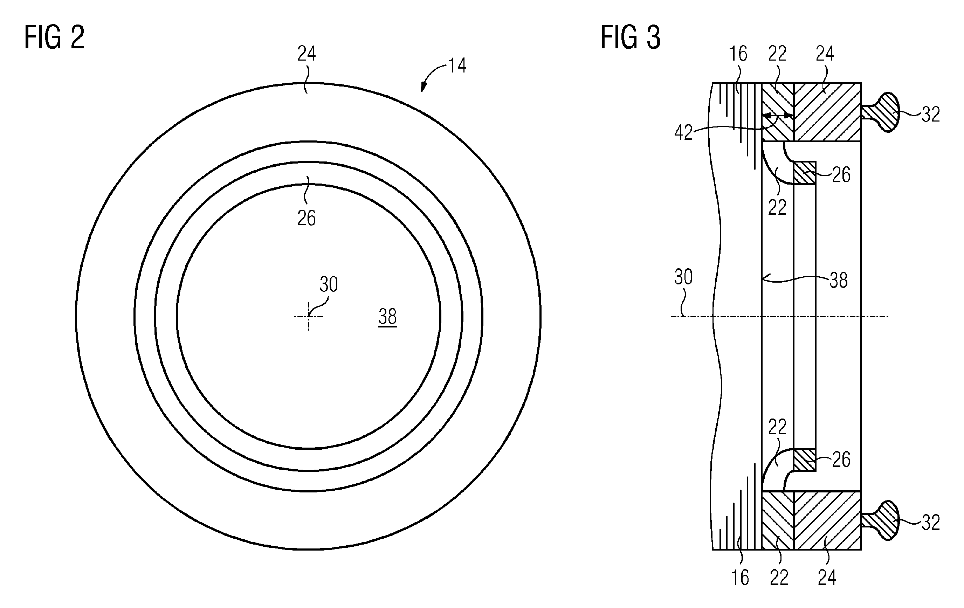

Der Läufer 14 ist in der Asynchronmaschine 10 drehbar angeordnet und über nicht weiter dargestellte Lagerungen gegenüber dem Ständer 12 in seiner Position drehbar festgelegt. Der Läufer 14 weist ein Läuferblechpaket 16 auf, welches eine Läuferwicklung 20 umfasst. Die Läuferwicklung 20 umfasst elektrische Leiter 22, die als Stäbe ausgebildet sind. An stirnseitigen Enden 38 des Läuferblechpakets 16 sind jeweils Kurzschlussringeinheiten 28 vorgesehen, mittels denen die elektrischen Leiter 22 (FIG 3, 5,8) stirnseitig jeweils elektrisch miteinander gekoppelt sind, um Käfige zu bilden.

Der Läufer 14 weist ferner eine Läuferwelle 40 auf, die zur Verbindung mit einer rotierbaren mechanischen Einrichtung dient. Die rotierbare mechanische Einrichtung kann eine beliebige Funktion aufweisen, beispielsweise eine Antriebsfunktion für eine Industriemaschine, ein elektrisch antreibbares Kraftfahrzeug und/oder dergleichen. Darüber hinaus kann die mechanische Einrichtung natürlich auch ein verbrennungskraftbetriebener Motor, ein Windrad und/oder dergleichen sein. Je nach Betriebsart kann dem Käfigläufer 14 mechanische Energie in Form der Drehbewegung zugeführt werden, so dass die Asynchronmaschine 10 in einem Generatormodus betrieben werden kann, oder die Asynchronmaschine 10 kann durch über das an ihr angeschlossene elektrische Energieversorgungsnetz elektrische Energie beziehen und über den Läufer 14 und die Läuferwelle 40 ein Drehmoment im Motorbetrieb bereitstellen.

FIG 2 zeigt in einer schematischen Stirnseitenansicht eine erste Ausgestaltung für die Asynchronmaschine 10 gemäß FIG 1, wobei der Läufer 14 jeweils stirnseitig zwei Kurzschlussringe 24, 26 aufweist, die die Kurzschlussringeinheit 28 bilden. Die Ausbildung der Kurzschlussringe 24, 26 ist an beiden Stirnseiten des Läufers 14 vorliegend gleich vorgesehen. Die Kurzschlussringe 24, 26 sind vorliegend radial übereinander angeordnet, sodass der Kurzschlussring 26 vom Kurzschlussring 24 radial umfasst ist. FIG 3 verdeutlicht diese Ausgestaltung. Zu erkennen ist ferner, dass der Kurzschlussring 24 axial hervorstehende Luftschaufeln 32 aufweist. Mit diesen Luftschaufeln 32 kann eine Luftführung erzeugt werden, die der stirnseitigen Kühlung des Läufers 14 dient.

Aus FIG 3 ist ferner ersichtlich, dass die Kurzschlussringe 24, 26 jeweils an die elektrischen Leiter 22 angeschlossen sind. Die elektrischen Leiter 22 sind vorliegend als Stableiter ausgebildet und ragen axial über das stirnseitige Ende 38 des Läuferblechpakets 16 mit einem Abstand a hinaus. Die Kurzschlussringe 24, 26 stehen deshalb nicht unmittelbar in Kontakt mit dem Läuferblechpaket 16. Die elektrischen Leiter 22 sind jeweils in Umfangsrichtung abwechselnd mit jeweils einem der Kurzschlussringe 24, 26 elektrisch leitend verbunden. Dadurch können voneinander elektrisch isolierte Käfige bereitgestellt werden, die, wie im Folgenden noch erläutert werden wird, eine verbesserte Funktion der Asynchronmaschine 10 nach sich ziehen.

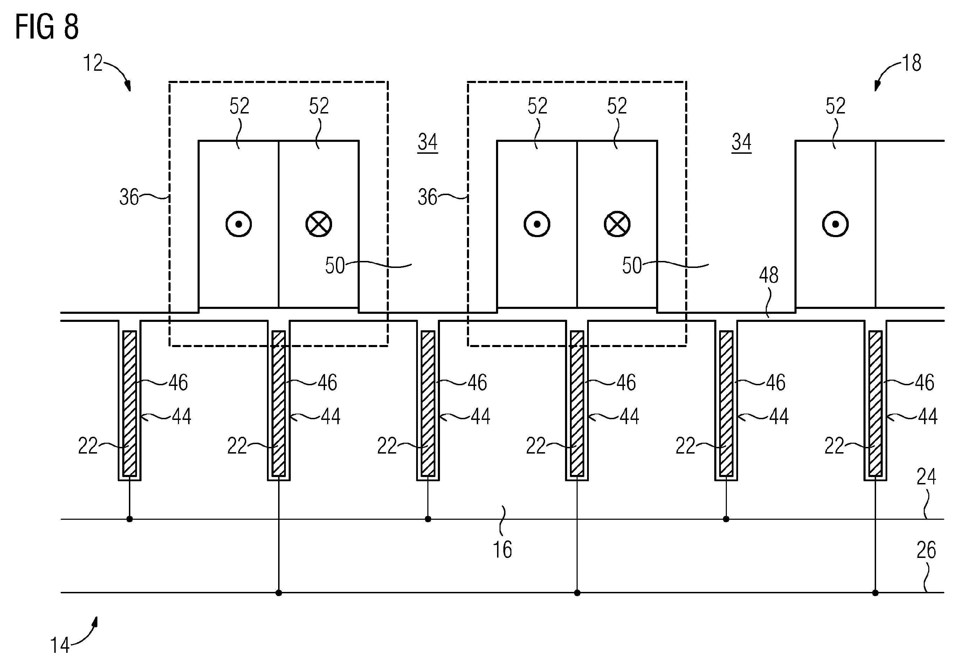

FIG 8 zeigt schematisch in einer ausschnittsweisen Querschnittsdarstellung einen Ausschnitt im Bereich des Luftspalts zwischen dem Ständer 12 und dem Läufer 14. Aus FIG 8 ist ersichtlich, dass die elektrischen Leiter 22 als Stableiter ausgebildet sind. Abwechselnd sind die elektrischen Leiter 22 jeweils mit dem Kurzschlussring 24 oder dem Kurzschlussring 26 elektrisch leitend verbunden. Die elektrischen Leiter 22 sind in Nuten 44 des Läuferblechpakets 16 ausgebildet, die radial nach außen offen sind und sich im Wesentlichen in axialer Richtung parallel zur Drehachse 30 des Läufers 14 erstrecken. Vorliegend ist zwar vorgesehen, dass die Nuten achsparallel zur Drehachse 30 ausgebildet sind, jedoch kann auch vorgesehen sein, dass die Nuten gegenüber der Drehachse 30 des Läufers 14 geschrägt ausgebildet sind. Die Schrägung kann je nach Anwendung für die Asynchronmaschine 10 variieren.

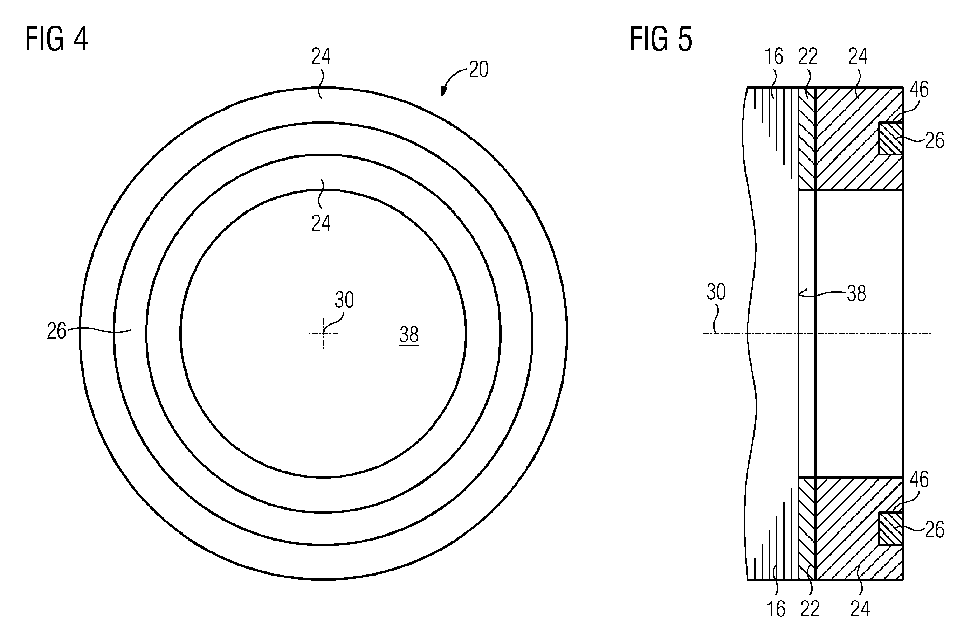

FIG 4 zeigt nun in einer Ansicht wie FIG 2 eine alternative zweite Ausgestaltung für die Kurzschlussringeinheit 28 gemäß FIG 1. Bei der Ausgestaltung gemäß FIG 4 ist vorgesehen, dass ein erster Kurzschlussring 24 einen zweiten Kurzschlussring 26 aufnimmt, sodass der zweite Kurzschlussring 26 innerhalb des Kurzschlussrings 24 angeordnet ist. Die Kurzschlussringe 24, 26 sind mittels einer elektrischen Isolationsschicht 46 elektrisch voneinander isoliert. Die elektrische Isolationsschicht 46 ist vorliegend durch eine elektrisch isolierende Oxidschicht gebildet. Die elektrische Isolationsschicht 46 wird unter Nutzung eines additiven Herstellverfahrens zum Herstellen des Läufers 14 hergestellt.

Auf diese Weise werden im Übrigen auch die elektrischen Leiter 22, die an die unterschiedlichen Kurzschlussringe 24, 26 angeschlossen sind, elektrisch von diesen und auch gegenüber einander sowie auch gegenüber dem Läuferblechpaket 16 voneinander elektrisch isoliert. FIG 5 zeigt in einer vergleichbaren Darstellung wie FIG 3 einen Längsschnitt entlang der Drehachse 30 des Läufers 14 im Bereich des stirnseitigen Endes 38 des Läuferblechpakets 16. Vorliegend ist der Kurzschlussring 26 stirnseitig radial zugänglich. In einer alternativen Ausgestaltung kann der Kurzschlussring 26 natürlich auch vollständig vom Werkstoff des Kurzschlussrings 24 umfasst sein. Mittels des additiven Herstellverfahrens sind hier weite Konstruktionsmöglichkeiten eröffnet, sodass die Kurzschlussringeinheit 28 an unterschiedlichste Anforderungen bedarfsgerecht mit großer Präzision angepasst werden kann.

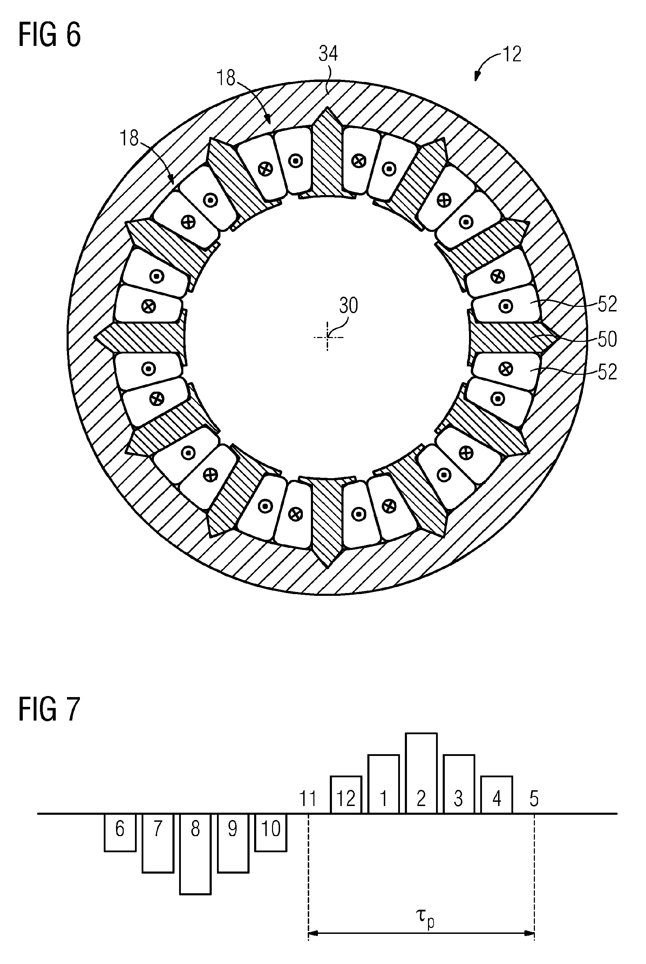

FIG 6 zeigt nun in einer schematischen Darstellung eine Ausgestaltung für den Ständer 12 der Asynchronmaschine 10 gemäß FIG 1. Aus FIG 6 ist ersichtlich, dass der Ständer 12 das Ständerblechpaket 34 aufweist, welches mit Zahnspulen 18 ausgerüstet ist, welche die Ständerwicklung 36 ausbilden. Vorliegend ist vorgesehen, dass zur Ausbildung einer zweipoligen Asynchronmaschine 10 Zahnspulen in Umfangsrichtung vorgesehen sind, die zur Ausbildung eines Drehfeldes entsprechend an das dreiphasige elektrische Energieversorgungsnetz angeschlossen sind. Dem Grunde nach kann das dreiphasige Energieversorgungsnetz jedoch auch durch einen geeignet ausgebildeten Umrichter bereitgestellt sein, der seinerseits an ein elektrisches Versorgungsnetz, einen elektrischen Energiespeicher, beispielsweise eine Hochvoltbatterie, und/oder dergleichen angeschlossen ist.

Jede der Zahlenspulen 18 weist ein Joch 50 auf, welches sich axial in Richtung der Drehachse 30 erstreckt. Dadurch wird ein jeweiliger Zahn gebildet. Das Joch 50 ist durch elektrische Leiter 52 eingefasst, die in entgegengesetzter Richtung vom gleichen elektrischen Strom durchflossen werden im bestimmungsgemäßen Betrieb und eine jeweilige Spule 18 der Ständerwicklung 36 bilden. Dadurch wird in vorgebbarer Weise entlang der Erstreckung des Jochs 50 ein Magnetfeld erzeugt, welches in einen Luftspalt 48 (FIG 8) eingebracht wird. Über den Luftspalt 48 verläuft das Feld in den Läufer 14, und hier insbesondere in das Läuferblechpaket 16, sodass die gewünschte elektromagnetische Verkettung bewirkt werden kann.

Anzumerken ist, dass es sich natürlich bei dem Magnetfeld sowie auch dem die elektrischen Leiter 52 durchströmenden Strom um zeitlich veränderliche Größen handelt.

FIG 7 zeigt in einer schematischen grafischen Darstellung ein Balkendiagramm, welches das in Umfangsrichtung durch den Ständer 12 erzeugte Magnetfeld im Bereich des Luftspalts 48 gemäß FIG 6 schematisch darstellt. Mit τ_{P} ist eine halbe Umlaufphase in Bezug auf die Polteilung gekennzeichnet. Die einzelnen Balken können jeweils einzelnen Zahnspulen 18 zugeordnet werden. Die Balken 1 bis 12, die in FIG 7 dargestellt sind, sind natürlich entsprechend der zeitlichen Veränderlichkeit ebenfalls veränderlich. Bei einer Beaufschlagung mit einer dreiphasigen Netzwechselspannung von 50 Hz verändern sich die Balken 1 bis 12 zeitlich entsprechend. Demzufolge stellt der Ständer gemäß FIG 6 ein entsprechendes rotierendes Drehfeld bereit. Das Balkendiagramm zeigt somit das Magnetfeld zu einem festen Zeitpunkt.

In FIG 8 ist nunmehr ein Ausschnitt im Bereich des Luftspalts 48 in einer Querschnittdarstellung quer zur Drehachse 30 dargestellt. Zu erkennen ist, dass läuferseitig gegenüber zwölf Zahnspulen 18 des Ständers 12 dreizehn trapezförmige Stäbe als elektrische Leiter 22 läuferseitig vorgesehen sind. Die elektrischen Leiter 22 sind - wie bereits oben erläutert - abwechselnd jeweils mit einem der Kurzschlussringe 24, 26 elektrisch leitend verbunden. Jeder der elektrischen Leiter 22 ist in einer radial nach außen offenen Längsnut 44 des Läuferblechpakets 16 ausgebildet. Darüber hinaus ist jeder der elektrischen Leiter 22 durch eine elektrische Isolationsschicht 46 vom Läuferblechpaket 16 elektrisch isoliert angeordnet.

Vorliegend ist vorgesehen, dass die elektrischen Leiter 22 sowie auch die elektrische Isolationsschicht 46 mittels eines additiven Herstellverfahrens hergestellt werden. Zunächst wird in gewohnter Weise das Läuferblechpaket 16 vorbereitet, indem einzelne Bleche des Läuferblechpakets 16 hergestellt werden. Dies kann durch Stanzen oder dergleichen erfolgen. Dann werden die Einzelbleche des Läuferblechpakets 16 mit einer nicht weiter dargestellten elektrischen Isolationsschicht versehen.

In einem nächsten Schritt wird mittels selektivem Laserschmelzen (SLS) als additivem Herstellverfahren zunächst eine erste der beiden Kurzschlussringeinheiten 28 hergestellt, indem in vorgebbarer Weise Kupfer abgeschieden wird, um die Kurzschlussringe 24, 26 herzustellen. Im weiteren Verlauf werden dann unmittelbar daran die elektrischen Leiter 22, hier die trapezförmigen Leiterstäbe, Schritt für Schritt ausgebildet. Mit dem Fortschreiten des Ausbildens der elektrischen Leiter 22 werden die einzelnen Bleche des Läuferblechpakets 16 eingefügt und so in einem kontinuierlichen Arbeitsverfahren der gesamte Läufer 14 hergestellt wird.

Zur Bereitstellung der zuverlässigen Funktion wird während des Ausbildens der elektrischen Leiter 22 deren Oberfläche mit einer elektrischen Isolationsschicht 46 versehen. Zu diesem Zweck wird eine entsprechende elektrisch isolierende Keramikschicht abgeschieden, die im ausgebildeten fertig hergestellten Läufer 14 zwischen den elektrischen Leitern 22 und dem Läuferblechpaket 16 angeordnet ist. Das additive Herstellverfahren wird so lange fortgeführt, bis die axial gegenüberliegende Kurzschlussringeinheit 28 vollständig ausgebildet ist.

Darüber hinaus kann vorgesehen sein, dass die Kurzschlussringe 24, 26 stirnseitig mit Luftleitschaufeln, wie den Luftschaufeln 32, versehen werden können. Dadurch kann zugleich eine Kühlungsfunktion für den Läufer 14 sowie auch für die gesamte elektrische Maschine 10 bereitgestellt werden.

In FIG 8 ist ferner schematisch mit dem Bezugszeichen 42 ein Streufluss gekennzeichnet. Dieser Streufluss 42 kann durch die zweite Käfigwicklung, die von der ersten Käfigwicklung elektrisch isoliert ausgebildet ist, reduziert werden, sodass insgesamt eine Funktionsverbesserung der Asynchronmaschine 10 erreicht werden kann.

Die voranstehend beschriebenen Ausführungsbeispiele dienen lediglich der Erläuterung der Erfindung und sind für diese nicht beschränkend. Insbesondere können natürlich Merkmale der Ausführungsbeispiele in beliebiger Weise miteinander kombiniert werden, um zu weiteren bedarfsgerechten Ausgestaltungen zu gelangen, ohne den Gedanken der Erfindung zu verlassen. Insbesondere können natürlich auch unterschiedliche additive Herstellverfahren miteinander kombiniert werden, um zu neuen Herstellverfahren für den Läufer der rotierenden elektrischen Maschine zu gelangen.

Darüber hinaus kann die Erfindung natürlich auch auf den Ständer der rotierenden elektrischen Maschine angewendet werden.

## Patentansprüche

1. Verfahren zum Herstellen eines Läufers (14) einer rotierenden elektrischen Maschine (10), bei dem zumindest eine Läuferwicklung (20) in ein Läuferblechpaket (16) des Läufers (14) elektrisch isoliert eingebracht wird, **dadurch gekennzeichnet, dass** die Läuferwicklung (20) mittels eines additiven Herstellverfahrens im Läuferblechpaket (16) ausgebildet wird, wobei zugleich mit dem Ausbilden der Läuferwicklung (20) zwischen einem elektrischen Leiter (22) der Läuferwicklung (20) und dem Läuferblechpaket (16) und/oder zwischen benachbart angeordneten Leitern (22) der Läuferwicklung (20) eine elektrische Isolationsschicht (46) ausgebildet wird.

2. Verfahren nach Anspruch 1, **dadurch gekennzeichnet, dass** die elektrische Isolationsschicht (46) durch Abscheiden eines elektrisch isolierenden keramischen Werkstoffs ausgebildet wird.

3. Verfahren nach Anspruch 1 oder 2, **dadurch gekennzeichnet, dass** die elektrische Isolationsschicht (46) ausgebildet wird, indem eine Oberfläche des Leiters (22) der Läuferwicklung (20) zumindest teilweise mit einem weiteren Stoff chemisch reagiert, um die elektrische Isolationsschicht (46) zumindest teilweise auszubilden.

4. Verfahren nach Anspruch 3, **dadurch gekennzeichnet, dass** der weitere Stoff ein Oxidationsmittel, insbesondere Sauerstoff, ist, welches durch chemische Reaktion mit einem Werkstoff des elektrischen Leiters (22) die elektrische Isolationsschicht (46) ausbildet.

5. Verfahren nach einem der vorhergehenden Ansprüche, **dadurch gekennzeichnet, dass** das Läuferblechpaket (16) gemeinsam mit der Läuferwicklung (20) ausgebildet wird.

6. Verfahren nach einem der vorhergehenden Ansprüche, **dadurch gekennzeichnet, dass** die elektrische Isolationsschicht (46) zumindest teilweise durch Abscheiden eines Kunststoffs ausgebildet wird.

7. Verfahren nach einem der vorhergehenden Ansprüche, **dadurch gekennzeichnet, dass** die Läuferwicklung (20) zumindest teilweise als elektrisch isolierter Käfig und/oder als eine Dämpferschleife ausgebildet wird.

8. Verfahren nach Anspruch 7, **dadurch gekennzeichnet, dass** an einem axialen Ende (38) des Läufers (14) wenigstens ein Kurzschlussring (24, 26) ausgebildet wird, an dem eine, insbesondere über eine axiale Erstreckung des Läuferblechpakets (16) hinausragende, Kühleinheit (32) ausgebildet wird.

9. Verfahren nach einem der vorhergehenden Ansprüche, **dadurch gekennzeichnet, dass** der elektrische Leiter (22) der Läuferwicklung (20) in einer radial nach außen offenen Nut (44) des Läuferblechpakets (16) ausgebildet und die Nut (44) mittels eines, insbesondere magnetischen, Nutverschlusses verschlossen wird.

10. Verfahren nach einem der vorhergehenden Ansprüche, **dadurch gekennzeichnet, dass** der elektrische Leiter (22) der Läuferwicklung (20) in einer Ebene angeordnet wird, die sich außerhalb einer Drehachse (30) des Läufers (14) erstreckt.

11. Verfahren nach einem der vorhergehenden Ansprüche, **dadurch gekennzeichnet, dass** wenigstens einer der elektrischen Leiter (22) der Läuferwicklung (20) im Läuferblechpaket (16) derart ausgebildet wird, dass eine vorgegebene Oberwellenwirkung in Bezug auf ein Magnetfeld eines Ständers (12) der elektrischen Maschine (10) im bestimmungsgemäßen Betrieb bereitgestellt wird.

12. Verfahren nach einem der Ansprüche 7 bis 11, **dadurch gekennzeichnet, dass** wenigstens zwei Käfige ausgebildet werden, von denen ein erster der Käfige für eine Wirkung in Bezug auf eine Grundwelle und ein zweiter der Käfige für eine Wirkung in Bezug auf eine Oberwelle ausgebildet wird.

13. Verfahren nach Anspruch 12, **dadurch gekennzeichnet, dass** der elektrische Leiter für den ersten Käfig mit einen größeren Leiterquerschnitt als der elektrische Leiter für den zweiten Käfig hergestellt wird.
